# EUROPÄISCHE PATENTSCHRIFT

(11) **EP 2 488 382 B1**
(45) Veröffentlichungstag und Bekanntmachung des Hinweises auf die Patenterteilung: **07.09.2016**
(21) Anmeldenummer: 10768410.2
(22) Anmeldetag: 09.10.2010
(51) Int. Cl.: B60K 15/077, B60K 15/03, B60K 15/035

(54) **KRAFTSTOFFBEHÄLTER FÜR EIN KFZ**
FUEL TANK FOR A MOTOR VEHICLE
RÉSERVOIR DE CARBURANT POUR VÉHICULE AUTOMOBILE

(30) Priorität: 16.10.2009 DE 102009049799
(43) Veröffentlichungstag der Anmeldung: 22.08.2012
(73) Patentinhaber: Kautex Textron GmbH & Co. KG, 53229 Bonn (DE)
(72) Erfinder: GEBERT, Klaus, 47877 Willich (DE)
(74) Vertreter: Kierdorf Ritschel Richly
(86) Internationale Anmeldenummer: PCT/EP2010/006176
(87) Internationale Veröffentlichungsnummer: WO 2011/045007

(56) Entgegenhaltungen:
- DE-A1- 10 342 081
- DE-A1- 19 723 704
- DE-A1-102005 043 888

## Beschreibung

Die Erfindung betrifft einen Kraftstoffbehälter für ein Kfz mit Mitteln zur Be- und Entlüftung sowie Mitteln zur Förderung von Kraftstoff an die Brennkraftmaschine eines Kfz, umfassend wenigstens eine in dem Kraftstoffbehälter vorzugsweise innerhalb eines dort vorgesehenen Schwallbehälters angeordnete Kraftstoffförderpumpe, wenigstens eine aus dem Vorlauf der Kraftstoffförderpumpe gespeiste Saugstrahlpumpe zur Befüllung wenigstens eines Schwallbehälters und/oder zur Entleerung wenigstens eines innerhalb des Kraftstoffbehälters angeordneten, von dem Kraftstoffbehälter gebildeten weiteren Volumens in den Schwallbehälter oder in das Volumen des Kraftstoffbehälters, in welchem der Schwallbehälter angeordnet ist.

Die Erfindung betrifft weiterhin ein Verfahren zum Betreiben einer Kraftstoffzufuhreinrichtung an die Brennkraftmaschine eines Kfz, wobei die Kraftstoffzufuhreinrichtung wenigstens einen Kraftstoffbehälter für ein Kfz mit Mitteln zum Be- und Entlüften, wenigstens eine in dem Kraftstoffbehälter innerhalb eines dort vorgesehenen Schwallbehälters angeordnete Kraftstoffförderpumpe, wenigstens eine aus dem Vorlauf der Kraftstoffförderpumpe gespeiste Saugstrahlpumpe zur Befüllung des Schwallbehälters und/oder zur Entleerung wenigstens eines innerhalb des Kraftstoffbehälters angeordneten oder gebildeten zweiten kommunizierenden Kraftstoffvolumens in den Schallbehälter oder in das Volumen, innerhalb dessen der Schwallbehälter angeordnet ist, umfasst.

Ein solcher Kraftstoffbehälter ist beispielsweise aus der EP 1 706 287 B1 bekannt.

Saugstrahlpumpen finden allgemein Anwendung, um insbesondere bei komplexen geometrischen Gestaltungen von Kraftstoffbehältern mit diversen miteinander kommunizierenden Teilvolumina jedenfalls eine Versorgung der nur in einem Teil des Behälters angeordneten Kraftstoffpumpe sicherzustellen. Üblicherweise ist die Kraftstoffpumpe in eine sogenannte Fördereinheit integriert, die einen Schwallbehälter umfasst. Dieser Schwallbehälter dient in erster Linie dazu, bei durch die Fahrdynamik hervorgerufenen Schwall- bzw. Schwappbewegungen des Kraftstoffes jedenfalls eine Versorgung der Kraftstoffpumpe sicherzustellen bzw. zu verhindern, dass der für die Versorgung der Kraftstoffpumpe benötige Kraftstoff im Kraftstoffbehälter hin- und her vagabundiert. Der Kraftstoff wird hierzu aus anderen Volumina des Kraftstoffbehälters mittels der Saugstrahlpumpen in den Schwallbehälter der Kraftstofffördereinheit gepumpt. Von dort übernimmt die Kraftstoffförderpumpe die Lieferung des Kraftstoffes an die Brennkraftmaschine des Motors. Normalerweise ist selbst bei einfachster Geometrie des Kraftstoffbehälters wenigstens eine Saugstrahlpumpe erforderlich, die aus dem Behältervolumen in den Schwallbehälter fördert.

Bei komplexeren Geometrien der Kraftstoffbehälter, beispielweise bei Satteltanks, wie sie häufig in Pkw Anwendung finden, ist wenigstens eine weitere Saugstrahlpumpe in einem Volumen des Kraftstoffbehälters angeordnet, welches über den Sattel (die Einschnürung des Kraftstoffbehälters) mit dem jeweils anderen Behältervolumen kommuniziert. Nur in einem Behältervolumen ist normalerweise die Fördereinheit mit der darin befindlichen Kraftstoffpumpe angeordnet, wohingegen in dem anderen Behältervolumen eine Saugstrahlpumpe platziert ist.

Saugstrahlpumpen funktionieren üblicherweise nach dem Venturi-Prinzip und benötigen zum Betrieb einen Treibstrahl an Kraftstoff, der dem Kraftstoffrücklauf und/oder dem Kraftstoffvorlauf der Brennkraftmaschine entnommen wird. In jüngster Zeit finden häufig in Kraftstofffördersystemen bedarfsgeregelte Kraftstoffförderpumpen Anwendung, bei denen die Förderleistung der Kraftstoffpumpe in Abhängigkeit von dem Kraftstoffbedarf der Bennkraftmaschine des Kraftfahrzeuges geregelt wird. Bei solchen Systemen muss der Treibstrahl für eine oder mehrere Saugstrahlpumpen aus dem Vorlauf entnommen werden. Es ist ohne weiteres einleuchtend, dass die benötige Treibmenge von der Kraftstoffpumpe zusätzlich gefördert werden muss. Dies führt je nach Anzahl und Verteilung der Saugstrahlpumpen im Kraftstoffbehälter zu einer Gesamtlast der elektrischen Pumpe, die sich negativ auf den Stromverbrauch, das Niederspannungsverhalten und die für die Brennkraftmaschine zur Verfügung stehende Fördermenge auswirkt.

Dieses Problem ist bereits in der EP 1 706 287 B1 angesprochen, dort wird an der zuvor beschriebenen Konfiguration eines Kraftstofffördersystems als nachteilig hervorgehoben, dass die Saugstrahlpumpe jedenfalls derart dimensioniert sein muss, dass sie auch bei einem geringen Förderdruck der Kraftstoffpumpe ausreichend Kraftstoff fördert. Dies führe jedoch dazu, dass in den meisten Arbeitszuständen die Saugstrahlpumpe unnötig viel Kraftstoff als Triebmittel erhalte, was den Einsatz einer besonders leistungsstarken Pumpe erfordere. In der EP 1 706 287 B1 wird daher vorgeschlagen, in der Treibmittelleitung zur Saugstrahlpumpe ein druckabhängiges Volumenstromreduzierventil vorzusehen, das den der Saugstrahlpumpe zugeführten Volumenstrom an Kraftstoff bei steigendem Förderdruck der Kraftstoffpumpe drosselt. Auf diese Art und Weise wird insbesondere bei bedarfgeregelten Fördereinheiten eine unnötige Förderung an Kraftstoff zu der Saugstrahlpumpe vermieden.

Diese Lösung wird jedoch komplexeren Systemen mit mehreren zu entleerenden Volumina nicht gerecht. Mit der Erhöhung der Anzahl von Saugstrahlpumpen im Behälter geht eine fortschreitende Reduzierung der für die Brennkraftmaschine zur Verfügung stehenden Kraftstoffmenge einher, so dass letztendlich die Kraftstoffpumpe entsprechend dimensioniert sein muss.

Aus der gattungsbildenden DE 103 42 081 A1 ist ein Kraftstoffbehälter für ein Kraftfahrzeug mit mehreren Kammern bekannt, wobei in den einzelnen Kammern jeweils eine Saugstrahlpumpe mit einem Füllstandssensor angeordnet ist. In einer zu der Saugstrahlpumpe führenden Treibmittelleitung ist ein Ventil angeordnet. Bei nahezu leerer Kammer wird eine Zufuhr von Kraftstoff zu der Saugstrahlpumpe unterbunden, damit eine unnötige Bewegung des Kraftstoffs vermieden wird.

Aus der DE 197 23 704 A1 ist eine Steuerung zum Beeinflussen einer Kraftstoffpumpe bekannt.

Die DE 10 2005 043 888 A1 beschreibt eine Entlüftungseinrichtung für einen Kraftstoffbehälter mit einer Flüssigkeitsfalle. Zur Leerung der Flüssigkeitsfalle ist eine Saugstrahlpumpe vorgesehen. Die Saugstrahlpumpe umfasst einen Füllstandsgrenzschalter zur Erfassung des Füllstandes an Kraftstoff in der Flüssigkeitsfalle. Die Saugstrahlpumpe wird erst aktiviert, wenn ein vorgesehener Füllstand an Kraftstoff in der Flüssigkeitsfalle überschritten wird.

Der Erfindung liegt daher das Problem zugrunde, die für die Entleerung einzelner im Behälter vorgesehener Volumina vorgesehene Treibmenge an Kraftstoff für die Saugstrahlpumpen weiterhin zu reduzieren. die Saugstrahlpumpen weiterhin zu reduzieren.

Die Aufgabe wird zunächst gelöst durch einen Kraftstoffbehälter für ein Kfz mit Mitteln zur Be- und Entlüftung sowie mit Mitteln zur Förderung von Kraftstoff an die Brennkraftmaschine eines Kfz, umfassend wenigstens eine in dem Kraftstoffbehälter innerhalb eines dort vorgesehenen Schwallbehälters angeordnete Kraftstoffförderpumpe, wenigstens eine, aus dem Vorlauf der Kraftstoffförderpumpe gespeiste Saugstrahlpumpe zur Befüllung des Schwallbehälters und/oder zur Entleerung wenigstens eines innerhalb des Kraftstoffbehälters angeordneten oder von dem Kraftstoffbehälter gebildeten weiteren Volumens in den Schwallbehälter oder in das Volumen des Kraftstoffbehälters, in welchem der Schwallbehälter angeordnet ist, wobei sich der Kraftstoffbehälter dadurch auszeichnet, dass die Saugstrahlpumpe so geschaltet ist, dass sie wechselweise in Abhängigkeit des Behälterfüllstandes Kraftstoff aus mehreren innerhalb des Kraftstoffbehälters angeordneten oder gebildeten Volumina Kraftstoff entnimmt. Vorzugsweise ist wenigstens eine zweite, ebenfalls aus dem Vorlauf gespeiste, Saugstrahlpumpe vorgesehen.

Der Erfindung liegt der Gedanke zugrunde, dass die volle Förderkapazität für innerhalb des Behälters zu fördernden Kraftstoff nur zeitweise benötigt wird, so dass es nicht erforderlich ist, diese Treibmenge dauernd zu fördern. Dabei kann entweder vorgesehen sein, dass eine Saugstrahlpumpe wechselweise Kraftstoff aus unterschiedlichen Volumina des Behälters entnimmt oder dass eine Saugstrahlpumpe, beispielsweise bei einem Satteltank, nur dann zugeschaltet wird, wenn der Behälterfüllstand dies erfordert.

Unter Volumen im Sinne der Erfindung ist nicht notwendigerweise nur das Kraftstoffvolumen im Behälter zu verstehen, vielmehr können auch innerhalb des Kraftstoffbehälters angeordnete, separate Volumina, beispielsweise des Be- und Entlüftungssystems vorgesehen sein, aus denen ebenfalls Kraftstoff aktiv entnommen bzw. gefördert wird.

Bei einer bevorzugten Variante der Erfindung ist vorgesehen, dass wenigstens eine Saugstrahlpumpe über wenigstens zwei Ansaugleitungen an mehrere zu entleerende Volumina angeschlossen ist, wobei innerhalb des Ansaugpfades wenigstens ein füllstandsabhängig schaltbares Ventil vorgesehen ist, das je nach Füllstand eine Ansaugleitung freigibt. Dabei kann ebenfalls vorgesehen sein, dass dieses Ventil die jeweils andere Ansaugleitung verschließt, beispielsweise um zu verhindern, dass etwa angesaugtes Gas zum Ausfall der betreffenden Saugstrahlpumpe führt.

Bei einer zweckmäßigen Ausgestaltung des Kraftstoffbehälters gemäß der Erfindung ist vorgesehen, dass eine Saugstrahlpumpe an wenigstens einen als Flüssigkeitsfalle ausgebildeten Sammelbehälter einer Behälterbe- und Entlüftungseinrichtung angeschlossen ist. Insbesondere bei der Behälterentlüftung bei Betrieb des Kfz bzw. des Kraftstoffbehälters aufgrund der Fahrdynamik werden üblicherweise nennenswerte Mengen an Kohlenwasserstoffen in flüssiger Phase mitgerissen. Dieser Mitriss an Kraftstoff wird als sogenannter "liquid carry-over" bezeichnet. Hierzu sind in Entlüftungspfaden üblicherweise Ausperlbehälter bzw. Sammelbehälter angeordnet, in denen flüssige Kohlenwasserstoffe abgeschieden werden. Bei verhältnismäßig niedrigem Füllstand im Kraftstoffbehälter erfolgt normalerweise eine selbsttätige, d.h. schwerkraftbedingte Entleerung solcher Sammelbehälter in das Kraftstoffvolumen des Kraftstoffbehälters. Bei verhältnismäßig hohem Füllstand im Kraftstoffbehälter ist eine solche Entleerung normalerweise nicht möglich, so dass hierfür vorgesehen ist, den Sammelbehälter aktiv zu entleeren. Beispielsweise kann dazu die Saugseite einer Saugstrahlpumpe an den betreffenden Sammelbehälter angeschlossen sein.

Der Erfindung liegt der Gedanke zugrunde, dass zur Entleerung des betreffenden Sammelbehälters eine Saugstrahlpumpe Anwendung finden kann, die üblicherweise zur Entleerung eines anderen Kraftstoffvolumens des Kraftstoffbehälters Anwendung findet, da die Entleerung des Sammelbehälters nur dann in Betracht kommt, wenn der Behälterfüllstand hoch ist, und dann diese Saugstrahlpumpen in der Regel nicht dafür benötigt werden, das kommunizierende Kraftstoffvolumen des Kraftstoffbehälters zu entleeren.

Das zur Schaltung der Saugstrahlpumpe erforderliche Ventil kann über wenigstens einen innerhalb des Kraftstoffbehälters angeordneten Füllstandgeber direkt oder indirekt schaltbar sein.

Beispielsweise kann das Ventil über wenigstens einen innerhalb des Sammelbehälters angeordneten Füllstandsgeber direkt oder indirekt betätigbar sein, wobei der Sammelbehälter so ausgebildet ist, dass sich dieser bei einem niedrigen Füllstand im Kraftstoffbehälter schwerkraftbetätigt in den Kraftstoffbehälter entleert. Steigt innerhalb des Sammelbehälters der Füllstand an, was nur dann der Fall sein wird, wenn der Kraftstoffspiegel im Kraftstoffbehälter hoch steht, so betätigt dieser Schwimmer vorzugsweise ein Ventil im Ansaugpfad der Saugstahlpumpe, so dass diese den Sammelbehälter entleeren kann.

Alternativ kann vorgesehen sein, dass das Ventil unmittelbar über einen innerhalb des Kraftstoffbehälters angeordneten Schwimmer betätigbar ist. Eine solche Variante umfasst jedwede Konfiguration von Volumina innerhalb des Behälters und jedwede Anordnung von Saugstrahlpumpen. Besonders zweckmäßig ist es, wenn das Ventil elektromagnetisch über ein von wenigstens einem Füllstandsgeber geliefertes Füllstandssignal betätigbar ist.

Die der Erfindung zugrundeliegende Aufgabe wird weiterhin gelöst durch ein Verfahren zum Betreiben einer Kraftstoffzufuhreinrichtung an die Brennkraftmaschine eines Kfz, wobei die Kraftstoffzufuhreinrichtung wenigstens einen Kraftstoffbehälter für ein Kfz mit Mitteln zum Be- und Entlüften, wenigstens eine in dem Kraftstoffbehälter innerhalb eines dort vorgesehenen Schwallbehälters angeordnete Kraftstoffförderpumpe und wenigstens eine aus dem Vorlauf der Kraftstoffförderpumpe gespeiste Saugstrahlpumpe zur Befüllung des Schwallbehälters und /oder zur Entleerung wenigstens eines innerhalb des Kraftstoffbehälters angeordneten oder gebildeten zweiten kommunizierenden Kraftstoffvolumens in den Schwallbehälter oder in das Volumen, innerhalb dessen der Schwallbehälter angeordnet ist, umfasst, wobei sich das Verfahren dadurch auszeichnet, dass eine Entleerung des zweiten oder eines weiteren Kraftstoffvolumens mit einer Saugstrahlpumpe oder gegebenenfalls einer weiteren Saugstrahlpumpe erst dann erfolgt, wenn der Behälterfüllstand unter einen bestimmten vorgegebenen Spiegel abgesunken ist, wobei wenigstens eine Saugstrahlpumpe wechselweise Kraftstoff aus unterschiedlichen Volumina des Kraftstoffbehälters entnimmt.

Bei einer Variante des Verfahrens gemäß der Erfindung erfolgt eine aktive Entleerung des zweiten oder eines weiteren Kraftstoffvolumens erst dann, wenn der Füllstand soweit gesunken ist, dass die betreffenden Volumina des Kraftstoffbehälters nicht mehr zwangsläufig miteinander kommunizieren.

Die Erfindung wird nachstehend anhand eines in den Zeichnungen dargestellten Ausführungsbeispiels erläutert. Es zeigen:
- Fig. 1: eine schematische Darstellung der Verteilung der Treibstoffströme bei einem Kraftstoffzufuhrsystem eines Kraftstoffbehälters nach dem Stand der Technik mit mehreren Saugstrahlpumpen,
- Fig. 2: eine schematische Darstellung eines Kraftstoffbehälters gemäß der Erfindung, stark vereinfacht und symbolhaft dargestellt,
- Fig. 3: eine vereinfachte schematische Darstellung des Kraftstoffzufuhrsystems ohne Kraftstoffbehälter mit Schaltbildern für bestimmte Funktionen,
- Fig. 4: eine vereinfachte Darstellung einer möglichen Ausgestaltung eines im Ansaugpfad einer Saugstrahlpumpe vorgesehenen Ventils nach der Erfindung,
- Fig. 5a, 5b: eine alternative Ausgestaltung eines solchen Ventils,
- Fig. 6a, 6b: eine vereinfachte schematische Darstellung einer an den Ansaugpfad einer Saugstrahlpumpe angeschlossenen Sammelbehälters.

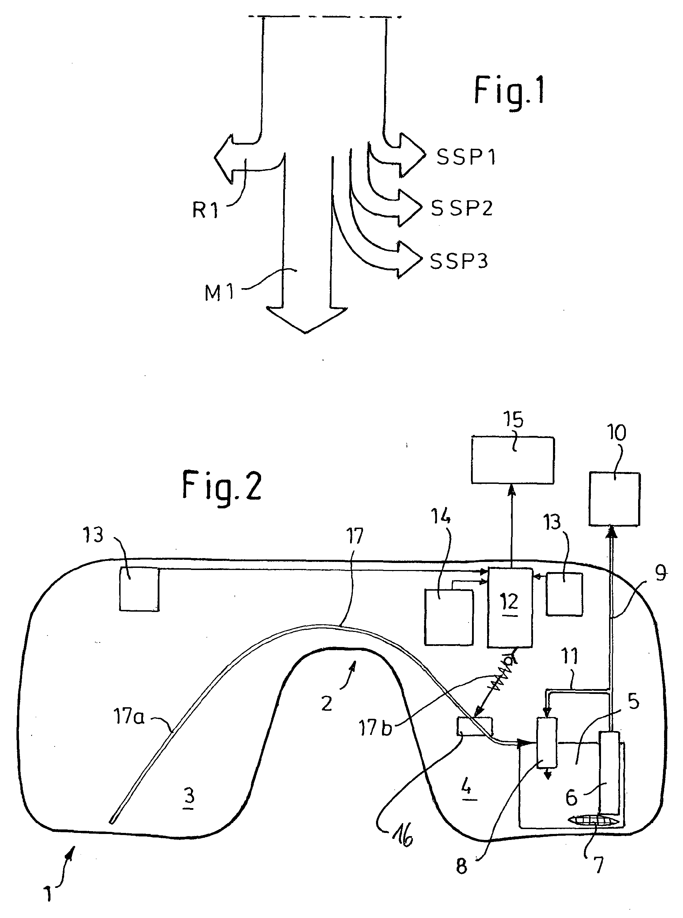

Es wird zunächst bezug genommen auf Fig. 1, in der graphisch die Treibstoffströme bzw. die Triebstoffmenge dargestellt ist, die von einer Kraftstoffförderpumpe zu bewältigen sind. Bei einem modernen SUV (sports utility vehicle) fördert die Brennkraftmaschine im Volllastbereich bis zu 60 l/h an Kraftstoff. Der von der Brennkraftmaschine abgenommene Volumenstrom an Treibstoff ist in der Fig. 1 mit M₁ bezeichnet. Die zusätzlich für die Regelbarkeit der Kraftstoffpumpe benötige Menge an Treibstoff ist in Fig. 1 mit R₁ bezeichnet. Darüber hinaus muss die Kraftstoffpumpe die für die Saugstrahlpumpen benötige Triebmenge an Kraftstoff, in Fig. 1 mit SSP1, SSP2 und SSP3 bezeichnet, bereitstellen. Jeder dieser Teilvolumenströme kann bei einem Förderdruck von etwa 4 bar bis zu 15 l/h betragen, so dass bei drei im Kraftstoffbehälter vorgesehenen Saugstrahlpumpen alleine ein Treibvolumen von etwa 45 l Kraftstoff pro Stunde benötigt wird.

Erfindungsgemäß ist vorgesehen, diese Treibmenge dadurch zu reduzieren, dass entweder eine Saugstrahlpumpe Kraftstoff wechselweise aus mehreren Volumina des Kraftstoffbehälters entnimmt oder gegebenenfalls inter mittierend betrieben wird und zwar in Abhängigkeit des Füllstandes in dem in Fig. 2 dargestellten Kraftstoffbehälter 1. Der in Fig. 1 dargestellte Kraftstoffbehälter 1 ist in bekannter Art und Weise als Kunststoff-Kraftstoffbehälter für einen Pkw ausgebildet. Bei dem beschriebenen Ausführungsbeispiel ist dieser als Satteltank mit zwei durch eine Einschnürung 2 getrennten Kraftstoffvolumina 3, 4 ausgebildet. Die an dem Kraftstoffbehälter 1 vorgesehene Einfüllöffnung sowie andere Funktionsbauteile sind in der Darstellung der Einfachheit halber weggelassen.

Der Kraftstoffbehälter 1 umfasst weiterhin einen Schwallbehälter 5, der in Fig. 2 in dem rechten Kraftstoffvolumen 4 angeordnet ist. Die Anordnung des Schwallbehälters 5 ist für die Erfindung nicht kritisch. Der Schwallbehälter 5 ist Teil einer Kraftstofffördereinheit, die unter anderem eine Kraftstoffförderpumpe 6 und wenigstens einen Füllstandsgeber 7 umfasst. Der Füllstandsgebers 7 ist, was aus der Zeichnung nicht ohne weiteres ersichtlich ist, an der Außenseite des Schwallbehälters 5 angelenkt und kann im einfachsten Fall als Hebelgeber mit Schwimmerkörper ausgebildet sein. Die Stellung des Füllstandsgeber 7 erzeugt in bekannter Art und Weise ein elektrisches Signal, welches über entsprechende, nicht darstellte elektronische Bauteile an die Fahrzeugelektronik weitergeleitet wird.

In der schematischen Darstellung in Fig. 1 ist mit 8 eine Saugstrahlpumpe bezeichnet, die als sogenannte saugende Saugstrahlpumpe ausgebildet ist und nach dem Venturi-Prinzip arbeitet. Ein Saugstrahl wird durch einen aus dem Kraftstoffvorlauf 9 zur Brennkraftmaschine 10 abgezweigten Treibstrahl 11 erzeugt. Saugseitig ist die Saugstrahlpumpe 8 einerseits an dasjenige Kraftstoffvolumen 3 angeschlossen, das gegenüberliegend demjenigen Kraftstoffvolumen 4 angeordnet ist, welches die Kraftstofffördereinheit umfasst, andererseits ist die Saugstrahlpumpe 8 an einen Sammelbehälter 12 einer Be- und Entlüftungseinrichtung des Kraftstoffbehälters 1 angeschlossen. Alternativ könnte die Saugstrahlpumpe 8 an mehrere Kraftstoffvolumina angeschlossen sein, so ist beispielsweise der Fall denkbar, dass der Kraftstoffbehälter 1 mehr als zwei kraftstoffführende und miteinander kommunizierende Volumina umfasst.

Die Be- und Entlüftungseinrichtung des Kraftstoffbehälters 1 gemäß der Erfindung ist ebenfalls in der Zeichnung stark vereinfacht und schematisch dargestellt. Diese umfasst beispielsweise zwei Entlüftungsventile 13 sowie ein Füllstandsbegrenzungsventil 14. Die Entlüftungsventile 13 können gleichermaßen auch als Rollover-Ventile (Überschlagssicherungsventile) ausgebildet sein. Sowohl die Entlüftungsventile 13 als auch das Füllstandsbegrenzungsventil 14 kommunizieren über entsprechende Entlüftungsleitungen mit dem Sammelbehälter 13, der wiederum an einen außerhalb des Kraftstoffbehälters 1 angeordnetes Kraftstoffdampffilter 15 angeschlossen ist. Der Sammelbehälter dient der Aufnahme von bei der Entlüftung des Kraftstoffbehälters 1 mitgerissenen Kohlenwasserstoffen in der flüssigen Phase. Insbesondere bei Schwallbewegungen des Kraftstoffs hervorgerufen durch Fahrdynamik werden nennenswerte Mengen an Kohlenwasserstofftröpfchen im Gasstrom mitgerissen, die nicht bis zum Kraftstoffdampffilter 15 mitgeführt werden dürfen. Letztere umfasst üblicherweise eine oder mehrere aktivkohlengefüllte Kammern, deren Adsorptivität bei Benetzung mit flüssigen Kohlenwasserstoffen herabgesetzt wird.

Insbesondere bei einem hohen Behälterfüllstand ist eine schwerkraftbedingte bzw. schwerkraftbetätigte Entleerung des Sammelbehälters 2 nicht gewährleistet, so dass für diesen Fall bei dem Kraftstoffbehälter 1 gemäß Ausführungsbeispiel eine aktive Entleerung über die Saugstrahlpumpe 8 vorgesehen ist.

An dieser Stelle sei angemerkt, dass wenigstens eine weitere Saugstrahlpumpe zur Förderung des in dem Tankvolumen 4 vorhandenen Kraftstoffs in den Schwallbehälter 5 vorgesehen ist. Diese Saugstrahlpumpe ist aus Gründen der Vereinfachung nicht dargestellt.

Die Saugstrahlpumpe 8 ist mit einer über ein Ventil 16 verzweigten Ansaugleitung 17a,b versehen. Ein Teil der Ansaugleitung 17a ist in das Kraftstoffvolumen 3 geführt, der andere Teil der Ansaugleitung 17b ist an den Sammelbehälter 12 angeschlossen.

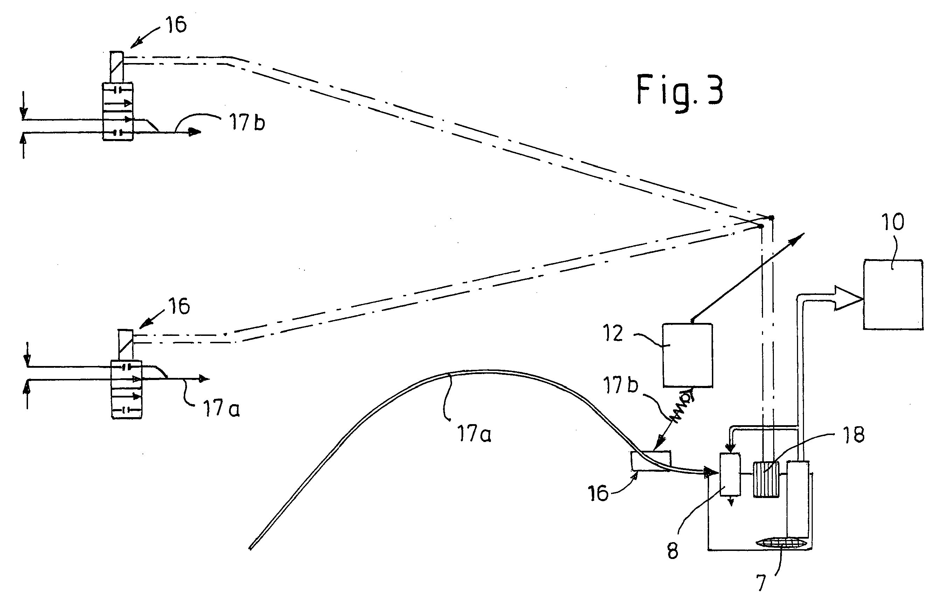

Das Ventil 16 ist Fig. 2 nur verhältnismäßig schematisch dargestellt. In Fig. 3 ist das Kraftstofffördersystem ohne den Kraftstoffbehälter 1 mit den Ventil-Schaltfunktionen in Form von Hydraulikschaltbildern eingezeichnet. Das Ventil ist als elektromagnetisch betätigbare 2/2-Wegeventil ausgebildet, wobei die in Fig. 3 obere Ansicht die Schaltstellung des Ventils bei hohem Behälterfüllstand veranschaulicht, die in Fig. 3 untere Ansicht die Schaltstellung des Ventils bei niedrigem Behälterfüllstand zeigt. Bei niedrigem Behälterfüllstand ist der Ansaugpfad bzw. die Ansaugleitung 17a zu dem Kraftstoffvolumen 3 freigeschaltet, wohingegen die Ansaugleitung 17b, die an den Sammelbehälter 12 angeschlossen ist, gesperrt ist, so dass nur Kraftstoff aus dem Kraftstoffvolumen 3 mittels der Saugstrahlpumpe 8 entnommen werden kann und in den Schwallbehälter 5 gefördert werden kann.

Bei der in Fig. 3 im oberen Teil gezeigten Ansicht ist die Ansaugleitung 17b zum Sammelbehälter 12 freigeschaltet, wohingegen der andere Ventilweg blockiert ist.

Ein in dem Sammelbehälter zusätzlich vorgesehenes Flatterventil, welches eine schwerkraftbetätigte Entleerung des Sammelbehälters bei niedrigem Behälterfüllstand ermöglicht, ist aus Vereinfachungsgründen nicht dargestellt.

Das elektrische Signal zur Betätigung des Ventils 16 wird über eine nur schematisch darstellte Steuereinheit 18 in der Kraftstofffördereinheit erzeugt. Das von der Steuereinheit 18 erzeugte Signal wird über den Füllstandsgeber 7 veranlasst.

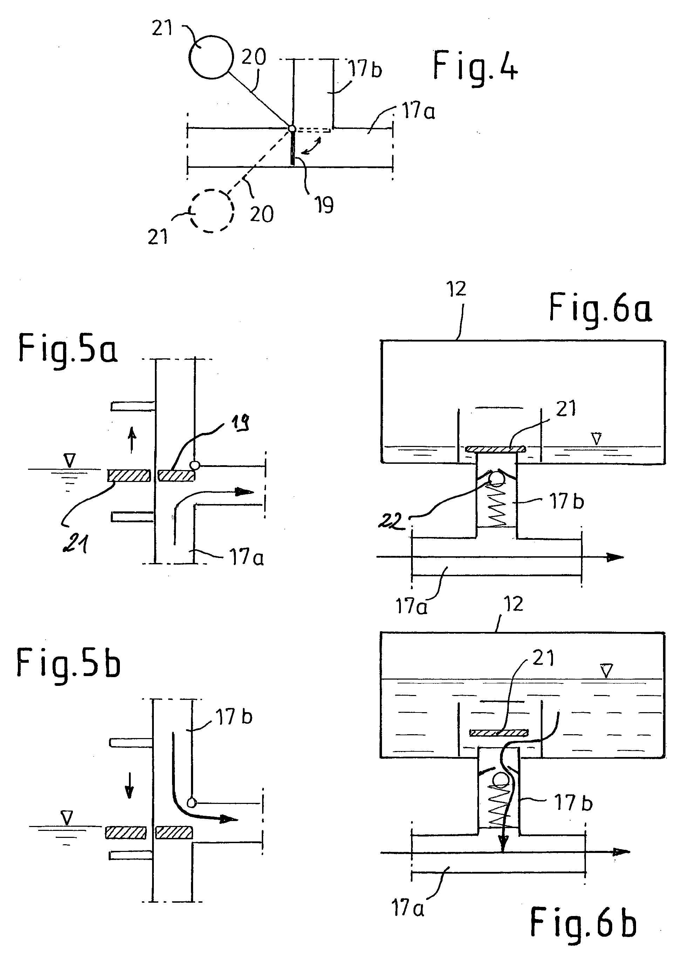

Eine alternative, verhältnismäßig einfache Variante der Steuerung des Ventils 16 ist in Fig. 4 dargestellt. In Fig. 4 ist eine Leitungsverzweigung der Ansaugleitung 17a, 17b dargestellt, in der als Ventil eine hebel betätigte Verschlussklappe 19 angeordnet ist. Die Verschlussklappe ist über einen Betätigungshebel 20 mit einem Schwimmerkörper 21 verbunden, der im aufgeschwommenen Zustand, d.h. bei hohem Behälterfüllstand die Verschlussklappe 19 in die durchgezeichnet eingezeichnete Stellung bewegt, in der die Ansaugleitung 17a verschlossen ist und der Teil der Ansaugleitung 17b zum Sammelbehälter 12 geöffnet ist.

Eine weitere Variante der Ausbildung und Betätigung des Ventils 16 ist in den Fig. 5a und 5b dargestellt. Dort sind gleiche Bauteile mit gleichen Bezugszeichen bezeichnet. Die Verschlussklappe 19 besteht aus einem magnetisierbaren Material und wirkt magnetisch mit einem ferromagnetischen Schwimmerkörper 21 zusammen, der aufgeschwommen (Fig. 5a) die Verschlussklappen 19 in eine die Ansaugleitung 17a freigebende Position bewegt und bei sinkendem Füllstand (Fig. 5b) die Ansaugleitung 17b freigibt und gleichzeitig die Ansaugleitung 17a verschließt.

Eine weitere Variante der Schaltung des Ventils 16 ist in den Fig. 6a und 6b dargestellt. Dort ist die Ansaugleitung 17b, die an den Sammelbehälter 12 angeschlossen ist, mit einem innerhalb des Sammelbehälters 12 angeordneten Schwimmerkörper 21 verschlossen.

Zusätzlich ist in der Ansaugleitung 17b ein federbelastetes Rückschlagventil 22 vorgesehen. Dieses ist in jedem Falle innerhalb des Teil 17b der Ansaugleitung vorzusehen.

Fig. 6a zeigt den Zustand des Sammelbehälters 12 bei niedrigem Füllstand innerhalb des Sammelbehälters, was gleichzusetzen ist mit einem niedrigem Füllstand im Kraftstoffbehälter 1. In diesem Zustand ist grundsätzlich eine schwerkraftbetätigte Entleerung des Sammelbehälters 12 über eine weitere nicht dargestellte, mit einem Ventil verschlossene Öffnung des Sammelbehälters 12 möglich. Der Füllstand des Kraftstoffbehälters ist dabei in der Regel so weit abgesunken, dass die Kraftstoffvolumina 3 und 4 nicht mehr miteinander kommunizieren. Der Schwimmkörper 21 verschließt die Ansaugleitung 12b, die Saugstrahlpumpe 8 zieht Kraftstoff nur über die Ansaugleitung 17a aus dem Kraftstoffvolumen 3.

Fig. 6b zeigt den Zustand, bei welchem der Schwimmerkörper 21 innerhalb des Sammelbehälters 12 aufgeschwommen ist, bedingt durch die Tatsache eines dort angestiegeneren Flüssigkeitsspiegels. Die Ansaugleitung 17b ist freigegeben. Die Ansaugleitung 17a hingegen ist nicht versperrt, was bei diesem Ausführungsbeispiel insoweit unschädlich ist, da das Kraftstoffvolumen 3a mit Kraftstoff gefüllt ist und somit nicht die Gefahr besteht, dass Gas angesaugt wird.

Bei den zuvor beschriebenen Ausführungsbeispielen ist durch die entsprechende Schaltung der hier in Rede stehenden Saugstrahlpumpe 8 über das Ventil 16 eine weitere bzw. separate Saugstrahlpumpe oder mehrere Saugstrahlpumpen zur Entleerung des Sammelbehälters 12 oder weiterer im Kraftstoffbehälter 1 vorgesehener Volumina entbehrlich.

### Bezugszeichenliste

- 1: Kraftstoffbehälter
- 2: Einschnürung
- 3,4: Kraftstoffvolumina
- 5: Schwallbehälter
- 6: Kraftstoffförderpumpe
- 7: Füllstandsgeber
- 8: Saugstrahlpumpe
- 9: Kraftstoffvorlauf
- 10: Brennkraftmaschine
- 11: Treibstrahl
- 12: Sammelbehälter
- 13: Entlüftungsventil
- 14: Füllstandsbegrenzungsventil
- 15: Kraftstoffdampffilter
- 16: Ventil
- 17a,b: Ansaugleitung
- 18: Steuereinheit
- 19: Verschlussklappe
- 20: Betätigungshebel
- 21: Schwimmerkörper

## Patentansprüche

1. Kraftstoffbehälter (1) für ein Kraftfahrzeug (Kfz) mit Mitteln zur Be- und Entlüftung sowie mit Mitteln zur Förderung von Kraftstoff an die Brennkraftmaschine (10) eines Kraftfahrzeuges, umfassend wenigstens eine in dem Kraftstoffbehälter (1) angeordnete Kraftstoffförderpumpe (6), wenigstens eine aus dem Vorlauf (9) der Kraftstoffförderpumpe (6) gespeiste Saugstrahlpumpe zur Befüllung wenigstens eines Schwallbehälters (5) und/oder zur Entleerung wenigstens eines innerhalb des Kraftstoffbehälters angeordneten oder von dem Kraftstoffbehälter gebildeten weiteren Volumens (3,12) in den Schwallbehälter (5) oder in das Volumen (4) des Kraftstoffbehälters (1), in welchem der Schwallbehälter (5) angeordnet ist, **dadurch gekennzeichnet, dass** die Saugstrahlpumpe (8) so geschaltet ist, dass sie wechselweise in Abhängigkeit des Behälterfüllstandes Kraftstoff aus mehreren innerhalb des Kraftstoffbehälters (1) angeordneten oder gebildeten Volumina (3,4,12) entnimmt.

2. Kraftstoffbehälter nach Anspruch 1, **gekennzeichnet durch** wenigstens eine zweite, ebenfalls aus dem Vorlauf gespeiste Saugstrahlpumpe zur Entleerung wenigstens eines innerhalb des Kraftstoffbehälters (1) gebildeten Volumens in den Schwallbehälter (5) oder in das Volumen des Kraftstoffbehälters (1), in welchem der Schwallbehälter (5) vorgesehen ist.

3. Kraftstoffbehälter nach Anspruch 1 oder 2, **dadurch gekennzeichnet, dass** wenigstens eine Saugstrahlpumpe (8), vorzugsweise die zweite, über wenigstens zwei Ansaugleitungen (17a,17b) an mehrere zu entleerende Volumina (3,4,12) angeschlossen ist, wobei innerhalb des Ansaugpfades wenigstens ein füllstandsabhängig schaltbares Ventil (16) vorgesehen ist, das je nach Füllstand eine Ansaugleitung (17a, 17b) freigibt.

4. Kraftstoffbehälter nach einem der Ansprüche 1 bis 3, **dadurch gekennzeichnet, dass** die Saugstrahlpumpe an wenigstens einen als Flüssigkeitsfalle ausgebildeten Sammelbehälter (12) einer Behälterbe- und Entlüftungseinrichtung angeschlossen ist.

5. Kraftstoffbehälter nach einem der Ansprüche 3 oder 4, **dadurch gekennzeichnet, dass** das Ventil (16) über wenigstens einen innerhalb des Kraftstoffbehälters (1) angeordneten Füllstandsgeber (7) direkt oder indirekt schaltbar ist.

6. Kraftstoffbehälter nach Anspruch 3, **dadurch gekennzeichnet, dass** das Ventil (16) über wenigstens einen innerhalb des Sammelbehälters (12) angeordneten Füllstandsgeber direkt oder indirekt betätigbar ist, wobei der Sammelbehälter (12) so ausgebildet ist, dass dieser sich bei einem niedrigen Füllstand in dem Kraftstoffbehälter schwerkraftbetätigt in den Kraftstoffbehälter entleert.

7. Kraftstoffbehälter nach einem der Ansprüche 3 bis 6, **dadurch gekennzeichnet, dass** das Ventil (16) unmittelbar über einen innerhalb des Kraftstoffbehälters (1) angeordneten Schwimmer betätigbar ist.

8. Kraftstoffbehälter nach einem der Ansprüche 3 bis 6, **dadurch gekennzeichnet, dass** das Ventil (16) elektromagnetisch über ein von wenigstens einem Füllstandsgeber (7) geliefertes Füllstandssignal betätigbar ist.

9. Verfahren zum Betreiben einer Kraftstoffzufuhreinrichtung an die Brennkraftmaschine eines Kraftfahrzeuges , wobei die Kraftstoffzufuhreinrichtung wenigstens einen Kraftstoffbehälter für ein Kraftfahrzeug mit Mitteln zum Be- und Entlüften, wenigstens eine in dem Kraftstoffbehälter innerhalb eines dort vorgesehenen Schwallbehälters angeordnete Kraftstoffförderpumpe, wenigstens eine aus dem Vorlauf der Kraftstoffförderpumpe gespeiste Saugstrahlpumpe zur Befüllung des Schwallbehälters bzw. zur Entleerung wenigstens eines innerhalb des Kraftstoffbehälters angeordneten oder gebildeten zweiten kommunizierenden Kraftstoffvolumens in den Schwallbehälter oder in das Volumen, innerhalb dessen der Schwallbehälter angeordnet ist, umfasst, **dadurch gekennzeichnet, dass** eine Entleerung des zweiten oder eines weiteren Kraftstoffvolumens mit der Saugstrahlpumpe oder gegebenenfalls einer weiteren Saugstrahlpumpe erst dann erfolgt, wenn der Behälterfüllstand unter einen bestimmten vorgegebenen Spiegel abgesunken ist, wobei wenigstens eine Saugstrahlpumpe wechselweise Kraftstoff aus unterschiedlichen Volumina des Kraftstoffbehälters entnimmt.

10. Verfahren nach Anspruch 9, **dadurch gekennzeichnet, dass** eine aktive Entleerung des zweiten oder eines weiteren Kraftstoffvolumens erst dann erfolgt, wenn der Füllstand so weit gesunken ist, dass die Volumina des Kraftstoffbehälters nicht mehr zwangsläufig miteinander kommunizieren.

## Claims

1. Fuel tank (1) for a motor vehicle (Kfz) with means for ventilation and purging and with means for delivery of fuel to the combustion engine (10) of a motor vehicle, comprising at least one fuel delivery pump (6) arranged in the fuel tank (1), at least one suction jet pump fed from the feed (9) of the fuel delivery pump (6) for filling at least one surge tank (5) and/or for draining at least one further volume (3, 12) arranged inside the fuel tank or formed by the fuel tank into the surge tank (5) or into the volume (4) of the fuel tank (1) in which the surge tank (5) is arranged, **characterized in that** the suction jet pump (8) is connected such that it takes fuel alternately, depending on the tank fill level, from several volumes (3, 4, 12) arranged or formed inside the fuel tank (1).

2. Fuel tank according to Claim 1, **characterized by** at least one second suction jet pump, also fed from the feed, for draining at least one volume formed inside the fuel tank (1) into the surge tank (5) or into the volume of the fuel tank (1) in which the surge tank (5) is provided.

3. Fuel tank according to Claim 1 or 2, **characterized in that** at least one suction jet pump (8), preferably the second, is connected via at least two suction lines (17a, 17b) to several volumes (3, 4, 12) to be drained, wherein within the suction path is provided at least one valve (16) which can be switched depending on the fill level and releases a suction line (17a, 17b) depending on the fill level.

4. Fuel tank according to any of Claims 1 to 3, **characterized in that** the suction jet pump is connected to at least one collection tank (12) formed as a fluid trap of a tank ventilation and purging device.

5. Fuel tank according to either of Claims 3 and 4, **characterized in that** the valve (16) is switchable directly or indirectly via at least one fill level sensor (7) arranged inside the fuel tank (1).

6. Fuel tank according to Claim 3, **characterized in that** the valve (16) is activatable directly or indirectly via at least one fill level sensor arranged inside the collection tank (12), wherein the collection tank (12) is formed such that, in the case of a low fill level in the fuel tank, this drains into the fuel tank under gravity activation.

7. Fuel tank according to any of Claims 3 to 6, **characterized in that** the valve (16) can be activated directly via a float arranged inside the fuel tank (1).

8. Fuel tank according to any of Claims 3 to 6, **characterized in that** the valve (16) can be activated electromagnetically via a fill level signal supplied by at least one fill level sensor (7).

9. Method for operating a fuel supply device to the combustion engine of a motor vehicle, wherein the fuel supply device comprises at least one fuel tank for a motor vehicle having means for ventilation and purging, at least one fuel delivery pump arranged in the fuel tank inside a surge tank provided therein, at least one suction jet pump fed from the feed of the fuel delivery pump for filling the surge tank or for draining at least one second communicating fuel volume arranged or formed inside the fuel tank into the surge tank or into the volume within which the surge tank is arranged, **characterized in that** drainage of the second or a further fuel volume with the suction jet pump or where applicable a further suction jet pump takes place only when the tank fill level has fallen below a specific pre-determined level, wherein at least one suction jet pump takes fuel alternately from different volumes of the fuel tank.

10. Method according to Claim 9, **characterized in that** active drainage of the second or a further fuel volume takes place only when the fill level has fallen so far that the volumes of the fuel tank no longer necessarily intercommunicate.

## Revendications

1. Réservoir de carburant (1) pour un véhicule automobile (Kfz) avec des moyens pour aérer et évacuer l'air ainsi que des moyens pour transporter du carburant au moteur à combustion interne (10) d'un véhicule automobile, comprenant au moins une pompe de transport de carburant (6) disposée dans le réservoir de carburant (1), au moins un éjecteur alimenté à partir de l'arrivée (9) de la pompe de transport de carburant (6) pour le remplissage d'au moins un réservoir de compensation (5) et/ou pour le vidage d'au moins un autre volume (3, 12) disposé à l'intérieur du réservoir de carburant ou formé par le réservoir de carburant dans le réservoir de compensation (5) ou dans le volume (4) du réservoir de carburant (1), dans lequel le réservoir de compensation (5) est disposé, **caractérisé en ce que** l'éjecteur (8) est connecté de telle manière qu'il prélève en alternance, en fonction du niveau de remplissage du réservoir, du carburant dans plusieurs volumes (3, 4, 12) disposés ou formés à l'intérieur du réservoir de carburant (1).

2. Réservoir de carburant selon la revendication 1, **caractérisé par** au moins un deuxième éjecteur également alimenté à partir de l'arrivée pour le vidage d'au moins un volume formé à l'intérieur du réservoir de carburant (1) dans le réservoir de compensation (5) ou dans le volume du réservoir de carburant (1) dans lequel le réservoir de compensation (5) est prévu.

3. Réservoir de carburant selon la revendication 1 ou 2, **caractérisé en ce qu'**au moins un éjecteur (8), de préférence le deuxième, est raccordé par au moins deux conduites d'aspiration (17a, 17b) à plusieurs volumes à vider (3, 4, 12), dans lequel il est prévu à l'intérieur du chemin d'aspiration au moins une soupape (16) commutable en fonction du niveau de remplissage, qui libère respectivement une conduite d'aspiration (17a, 17b) en fonction du niveau de remplissage.

4. Réservoir de carburant selon l'une quelconque des revendications 1 à 3, **caractérisé en ce que** l'éjecteur est raccordé à au moins un réservoir de collecte (12) réalisé en forme de piège à liquide d'un dispositif d'aération et d'évacuation d'air du réservoir.

5. Réservoir de carburant selon une des revendications 3 ou 4, **caractérisé en ce que** la soupape (16) peut être commutée directement ou indirectement au moyen d'au moins un détecteur de niveau (7) disposé à l'intérieur du réservoir de carburant (1).

6. Réservoir de carburant selon la revendication 3, **caractérisé en ce que** la soupape (16) peut être actionnée directement ou indirectement au moyen d'au moins un détecteur de niveau de remplissage disposé à l'intérieur du réservoir de collecte (12), dans lequel le réservoir de collecte (12) est configuré de telle manière que, en cas de niveau de remplissage bas dans le réservoir de carburant, il se vide par gravité dans le réservoir de carburant.

7. Réservoir de carburant selon l'une quelconque des revendications 3 à 6, **caractérisé en ce que** la soupape (16) peut être actionnée directement au moyen d'un flotteur disposé à l'intérieur du réservoir de carburant (1).

8. Réservoir de carburant selon l'une quelconque des revendications 3 à 6, **caractérisé en ce que** la soupape (16) peut être actionnée de façon électromagnétique au moyen d'au moins un signal de niveau de remplissage fourni par un détecteur de niveau de remplissage (7).

9. Procédé de fonctionnement d'un dispositif d'amenée de carburant au moteur à combustion interne d'un véhicule automobile, dans lequel le dispositif d'amenée de carburant comprend au moins un réservoir de carburant pour un véhicule automobile avec des moyens pour aérer et évacuer l'air, au moins une pompe de transport de carburant disposée dans le réservoir de carburant à l'intérieur d'un réservoir de compensation prévu dans celui-ci, au moins un éjecteur alimenté à partir de l'arrivée de la pompe de transport de carburant pour le remplissage du réservoir de compensation ou pour le vidage d'au moins un deuxième volume de carburant communiquant disposé ou formé à l'intérieur du réservoir de carburant dans le réservoir de compensation ou dans le volume, à l'intérieur duquel le réservoir de compensation est disposé, **caractérisé en ce qu'**un vidage du deuxième ou d'un autre volume de carburant avec l'éjecteur ou éventuellement un autre éjecteur n'est effectué que lorsque le niveau de remplissage du réservoir est descendu en dessous d'un certain niveau prédéterminé, dans lequel au moins un éjecteur prélève en alternance du carburant dans différents volumes du réservoir de carburant.

10. Procédé selon la revendication 9, **caractérisé en ce qu'**un vidage actif du deuxième ou d'un autre volume de carburant n'est effectué que lorsque le niveau de remplissage est descendu au point que les volumes du réservoir de carburant ne peuvent plus communiquer d'office l'un avec l'autre.
